# EUROPÄISCHE PATENTANMELDUNG

(11) **EP 3 095 320 A1**
(43) Veröffentlichungstag der Anmeldung: **23.11.2016**
(21) Anmeldenummer: 16168942.7
(22) Anmeldetag: 10.05.2016
(51) Int. Cl.: A01G 27/02, A01G 27/00

(54) **PFLANZGEFÄSS MIT WASSERMANAGEMENTSYSTEM**

(30) Priorität: 21.05.2015 DE 102015209344
(71) Anmelder: Marketing Partners Management GmbH, 12277 Berlin (DE)
(72) Erfinder: KOEHN, Matthias-Reinhard, 10117 Berlin (DE)

(57) **Zusammenfassung**

Die Erfindung betrifft ein Pflanzgefäß mit einer Rahmenkonstruktion (1), einem in die Rahmenkonstruktion (1) eingesetzten Wasserreservoir (9), das von der Rahmenkonstruktion (1) getragen wird, einer in die Rahmenkonstruktion (1) eingesetzten Pflanzwanne (11), die sich zumindest teilweise oberhalb des Wasserreservoirs (9) erstreckt, einem Ablauf (27) in der Pflanzwanne (11), durch den eine Strömungsverbindung zwischen einem Innenbereich (18) der Pflanzwanne (11) und einem Innenbereich des Wasserreservoirs (9) realisiert ist, einer Pumpe (12) mit einer Saugseite (13) und einer Druckseite (16), wobei die Saugseite (13) in Strömungsverbindung mit dem Innenbereich des Wasserreservoirs (9) steht und die Druckseite (16) in Strömungsverbindung mit dem Innenbereich (18) der Pflanzwanne (11) steht, und einer seitlichen Verkleidung (21, 22, 28), die sich entlang zumindest eines Abschnitts eines seitlichen Außenbereichs der Rahmenkonstruktion (1) erstreckt und die Rahmenkonstruktion (1) in diesem Abschnitt überdeckt.

## Beschreibung

Die vorliegende Erfindung betrifft ein Pflanzgefäß gemäß dem Oberbegriff des Anspruchs 1.

Aus dem Stand der Technik sind verschiedene Pflanzgefäße bekannt. Beispielsweise gibt es einfache Blumentöpfe, in die eine Pflanze eingepflanzt werden kann. Ferner sind selbstbewässernde Pflanzgefäße bekannt, bei denen zwischen einer äußeren Gefäßwandung und einer inneren Gefäßwandung ein Hohlraum gebildet ist, der mit Wasser gefüllt werden kann und der als Wasserreservoir dient. Eine in einem solchen Pflanzgefäß eingepflanzte Pflanze kann dann selbsttätig Wasser aus dem Wasserreservoir aufsaugen, wenn ihre Wurzeln weit genug zum Wasserreservoir hin reichen. Der Benutzer muss hierbei in regelmäßigen Abständen den Wasserstand im regelmäßigen kleinvolumigen Wasserreservoir kontrollieren und bei Bedarf Wasser nachfüllen.

Problematisch hierbei ist, dass eine stetige Benutzerinteraktion und Pflege eines solchen Pflanzgefäßes erforderlich ist, um ein Verdorren der eingesetzten Pflanze zu verhindern.

Der vorliegenden Erfindung liegt die Aufgabe zugrunde, ein Pflanzgefäß bereitzustellen, das für ein Pflanzenwachstum geeignete Feuchtigkeitsbedingungen über einen längeren Zeitraum ohne Benutzerinteraktion ermöglicht, als dies aus dem Stand der Technik bekannt ist.

Diese Aufgabe wird durch ein Pflanzgefäß mit den Merkmalen des Anspruchs 1 gelöst. Ein solches Pflanzgefäß weist eine Rahmenkonstruktion auf. Innerhalb der Rahmenkonstruktion befindet sich ein Wasserreservoir. Dieses Wasserreservoir ist in die Rahmenkonstruktion eingesetzt und wird von der Rahmenkonstruktion getragen. Dabei kann das Wasserreservoir vorzugsweise von oben in die Rahmenkonstruktion eingesetzt werden. Das Wasserreservoir kann beispielsweise als eine nach oben offene Wanne ausgestaltet sein.

Das Pflanzgefäß weist ferner eine Pflanzwanne auf, die ebenfalls in die Rahmenkonstruktion eingesetzt ist. Die Pflanzwanne erstreckt sich dabei zumindest teilweise oberhalb des Wasserreservoirs. Beispielsweise ist es möglich, dass die Pflanzwanne das Wasserreservoir vollständig überdeckt.

In der Pflanzwanne ist ein Ablauf vorgesehen. Durch den Ablauf kann eine Flüssigkeit von einem Innenbereich der Pflanzwanne in einen Innenbereich des Wasserreservoirs laufen. Das heißt, der Ablauf stellt eine Strömungsverbindung zwischen dem Innenbereich der Pflanzwanne und im Innenbereich des Wasserreservoirs bereit. Dabei lässt sich durch die Größe des Ablaufs bzw. die Größe von Löchern, die im Ablauf ausgebildet sind, eine Strömungsgeschwindigkeit bzw. eine maximal durch den Ablauf pro Zeiteinheit hindurchströmende Flüssigkeitsmenge festlegen. Auf diese Weise lässt sich das Pflanzgefäß an unterschiedliche Anforderungen verschiedener, in das Pflanzgefäß einzusetzender Pflanzen anpassen.

Ferner weist das Pflanzgefäß eine Pumpe auf. Eine solche Pumpe weist eine Saugseite und eine Druckseite auf. Die Saugseite steht in Strömungsverbindung mit dem Innenbereich des Wasserreservoirs. Die Druckseite steht in Strömungsverbindung mit dem Innenbereich der Pflanzwanne. Damit ist es der Pumpe möglich, aus dem Wasserreservoir heraus Wasser oder eine andere Flüssigkeit, die sich im Wasserreservoir befindet, zu saugen und in den Innenbereich der Pflanzwanne zu überführen. Damit ist es möglich, den Innenbereich der Pflanzwanne kontinuierlich feucht zu halten, gleichzeitig aber ein Ablaufen überschüssiger Flüssigkeit durch den Ablauf zu ermöglichen. Wenn die Pflanzwanne beispielsweise mit Erde oder mit einem Pflanzgranulat gefüllt ist, kann man auf diese Art und Weise einen definierten Feuchtigkeitsgehalt der Erde bzw. des Pflanzgranulats einstellen, vermeidet jedoch Staunässe, die für zahlreiche Pflanzen unvorteilhaft ist.

Schließlich weist das Pflanzgefäß eine seitliche Verkleidung zum Verkleiden der Rahmenkonstruktion auf, die sich entlang zumindest eines Abschnitts eines seitlichen Außenbereichs der Rahmenkonstruktion erstreckt. In diesem Bereich, in dem sich die seitliche Verkleidung entlang der Rahmenkonstruktion erstreckt, überdeckt sie die Rahmenkonstruktion und darunterliegende andere Elemente des "Innenlebens" des Pflanzgefäßes, insbesondere das Wasserreservoir und die Pflanzwanne.

Durch ein derartiges Pflanzgefäß wird eine Möglichkeit geschaffen, in einem weitgehend autarken System, das lediglich eine Energiezufuhr für die Pumpe benötigt, für ein Pflanzenwachstum geeignete Feuchtigkeitsbedingungen bereitzustellen und über einen langen Zeitraum dauerhaft aufrechtzuerhalten, ohne dass ein Benutzer hierfür manuell interagieren muss. Das Wasserreservoir ist dabei vorzugsweise so groß bemessen, dass die in ihm enthaltene Wasser- bzw. Flüssigkeitsmenge für ein Feuchthalten eines Pflanzsubstrates in der Pflanzwanne über einen Zeitraum von mindestens einer Woche, insbesondere mindestens 2 Wochen, insbesondere mindestens 3 Wochen, insbesondere mindestens 4 Wochen, insbesondere mindestens einen Monat, insbesondere mindestens 2 Monate, insbesondere mindestens 3 Monate, insbesondere mindestens 4 Monate, insbesondere mindestens 5 Monate und ganz besonders mindestens 6 Monate gewährleistet. Beispielsweise kann ein Feuchthalten eines Pflanzsubstrates innerhalb des Pflanzgefäßes für einen Zeitraum von einer Woche bis 6 Monaten oder für ein beliebiges anderes Intervall, das aus den vorgenannten Zeiträumen gebildet werden kann (beispielsweise 3 Wochen bis 4 Monate), gewährleistet werden.

Die Länge dieses Zeitraums, innerhalb dessen das Pflanzsubstrat feucht gehalten werden kann, hängt unter anderem vom Einsatzstandort des Pflanzgefäßes ab. Wird das Pflanzgefäß beispielsweise in einem Außenbereich in einer eher feuchten Region aufgestellt, sorgen Regenfälle für eine Kompensation zwischenzeitlich eingetretenen Wasserverbrauchs durch in dem Pflanzgefäß wachsende Pflanzen. Wird das Pflanzgefäß hingegen in einer eher trockenen Region aufgestellt und bleiben derartige Regenfälle aus, fällt der Zeitraum, innerhalb dessen ein Pflanzsubstrat feucht gehalten werden kann, geringer aus als in einer eher feuchten Region. Weitere Unterschiede können sich zudem durch die Größe und den Wasserbedarf der in dem Pflanzgefäß vorhandenen Pflanzen ergeben. Wenn das Pflanzgefäß in einem Innenbereich aufgestellt wird, spielen die in dem entsprechenden Raum vorherrschenden klimatischen Bedingungen (Luftfeuchtigkeit, Raumtemperatur) eine wesentliche Rolle, die den Zeitraum beeinflussen, innerhalb dessen ein Pflanzsubstrat feucht gehalten werden kann.

Durch die seitliche Verkleidung wird zudem ein optisch ansprechendes Erscheinungsbild des Pflanzgefäßes gewährleistet. Die seitliche Verkleidung kann beispielsweise an die Rahmenkonstruktion angeschraubt werden, um ein Abnehmen der seitlichen Verkleidung im Bedarfsfall auf besonders einfache Art und Weise zu ermöglichen. Es ist dabei vorgesehen, verschieden ausgestaltete seitliche Verkleidungen anzubieten, um Pflanzgefäße in unterschiedlichen Designs bereitstellen zu können. Derartige Designs können bei Bedarf miteinander kombiniert werden. Ferner ist es möglich, durch den Austausch einer seitlichen Verkleidung gegen eine andere seitliche Verkleidung das Design des gesamten Pflanzgefäßes zu verändern. Die bevorzugt vorgesehene Verschraubung der seitlichen Verkleidung mit der Rahmenkonstruktion ermöglicht dabei eine schnelle Austauschbarkeit der seitlichen Verkleidung. Dabei ist es möglich, dass die seitliche Verkleidung in einer beliebig feinen Einteilung segmentiert ausgestaltet ist.

Der bei dem erfindungsgemäß beanspruchten Pflanzgefäß vorgesehene Wasserkreislauf, der durch die Pumpe in Lauf gehalten wird und eine Überführung von Wasser aus dem Wasserreservoir in die Pflanzwanne mit nachfolgender Rückführung des Wassers in das Wasserreservoir ermöglicht, kann auch als Wassermanagementsystem bezeichnet werden. Daher stellt das vorliegend beschriebene Pflanzgefäß ein Pflanzgefäß mit Wassermanagementsystem dar, welches - im Gegensatz zu aus dem Stand der Technik bekannten Pflanzgefäßen - über einen längeren Zeitraum für wachstumsbegünstigende Feuchtigkeitsbedingungen innerhalb der Pflanzwanne sorgt, ohne dass ein Eingriff eines Benutzers erforderlich ist. Der Betrieb der Pumpe kann dabei in Intervallen erfolgen, die beispielsweise über eine Zeitschaltuhr vorgegeben werden.

Besonders vorteilhaft ist dabei, dass das Wasser ganz bewusst zu den Wurzeln einer Pflanze gebracht wird, die in das Pflanzgefäß eingepflanzt ist. Denn die Wasserzufuhr in die Pflanzwanne erfolgt insbesondere in einem oberen Bereich der Pflanzwanne, so dass ein Großteil eines Pflanzsubstrats, das in der Pflanzwanne vorhanden ist, insbesondere das gesamte Pflanzsubstrat, befeuchtet oder feucht gehalten wird. Es ist also nicht erforderlich, dass die Wurzeln ihren Weg zu einem unterhalb einer Pflanzwanne angeordneten Wasserreservoir finden, wie dies bei den aus dem Stand der Technik bekannten Lösungen der Fall ist. Vielmehr können auch sehr kleine Pflanzen, die noch keine ausgeprägte Wurzelfeinstruktur und noch keine besonders langen Wurzeln aufweisen, bereits in dem Pflanzgefäß wachsen, da auch ihre Wurzeln zuverlässig mit Wasser versorgt werden. Ferner ist es möglich, verschiedenartig wurzelnde Pflanzen gleichermaßen in einem einzigen Pflanzgefäß wachsen zu lassen. Denn durch die erfindungsgemäß vorgesehene Bewässerung der Pflanzwanne kommen flachwurzelnde Pflanzen gleichermaßen in Wasserkontakt wie tiefwurzelnde Pflanzen. Damit bietet das erfindungsgemäß beanspruchte Pflanzgefäß hinsichtlich einer geeigneten Bepflanzung eine viel größere Variationsmöglichkeit als die aus dem Stand der Technik bekannten Pflanzgefäß

In einer Variante ist die Rahmenkonstruktion aus Aluminiumhohlprofilen hergestellt, die durch Schraub- und/oder Schweißverbindungen miteinander verbunden sind. Derartige Aluminiumhohlprofile haben ein geringes Eigengewicht und können der Rahmenkonstruktion dennoch die für die Aufnahme des Wasserreservoirs und der Pflanzwanne benötigte Steifigkeit und Belastbarkeit verleihen. Edelstahlhohlprofile sind ebenfalls gut geeignet, die Rahmenkonstruktion aufzubauen.

Das Wasserreservoir kann beispielsweise aus Edelstahl oder einem anderen inerten Material bestehen, das auch bei längerem Kontakt mit einer Flüssigkeit wie Wasser keine nachteiligen Korrosionserscheinungen zeigt. Ein Kunststoff wäre ebenfalls ein geeignetes Material für das Wasserreservoir.

In einer Variante ist das Wasserreservoir nicht mit der Rahmenkonstruktion verschraubt, sondern lediglich in die Rahmenkonstruktion hineingesetzt. Dies ermöglicht einerseits eine einfache Montage und Demontage des Pflanzgefäßes und sichert andererseits eine flüssigkeitsdichte Ausgestaltung des Wasserreservoirs, die im Falle einer Verschraubung des Wasserreservoirs mit der Rahmenkonstruktion nur durch das Vorsehen zusätzlicher Dichtelemente an den Verschraubungspunkten gewährleistet werden könnte.

Die Pflanzwanne selbst kann auch beispielsweise aus Edelstahl oder einem Kunststoff bzw. einem anderen gegenüber Wasser im Wesentlichen inerten Material bestehen.

Das Wasserreservoir wird vorzugsweise derart in die Rahmenkonstruktion eingesetzt, dass es mit drei Seitenbereichen und einem unteren Bereich der Rahmenkonstruktion in Kontakt steht, während zwischen dem Wasserreservoir und der Rahmenkonstruktion auf einer vierten Seite ein Freiraum ausgebildet ist. Dieser Freiraum kann dann von anderen Elementen des Pflanzgefäßes eingenommen werden.

In einer Variante ragt das Wasserreservoir zumindest teilweise aus der Rahmenkonstruktion heraus, sodass es in diesem aus der Rahmenkonstruktion herausragenden Bereich nicht von der Pflanzwanne überdeckt wird. Das Wasserreservoir ist in diesem herausragenden Bereich dann vorzugsweise abgedeckt ausgestaltet, sodass dort keine Verunreinigungen in das Wasserreservoir von oben eindringen können. Das derart abgedeckte Wasserreservoir kann dann beispielsweise als Sitzbank benutzt werden, sodass das gesamte Pflanzgefäß in Form eines Gartenmöbels eingesetzt werden kann. Auf diese Art und Weise ist auch ein stufenartiger Aufbau des Pflanzgefäßes möglich, sodass Pflanzgefäße in unterschiedlichen Dimensionen realisiert werden können, bei denen die Pflanzwanne dennoch gut von außen zugänglich ist (nämlich beispielsweise dann, wenn ein Benutzer sich auf die durch das Wasserreservoir gebildete Stufe stellt).

In einer weiteren Variante kann die zuvor erläuterte Variante auch dadurch realisiert werden, dass die Rahmenkonstruktion einen im Vergleich zur Pflanzwanne nach außen ragenden Abschnitt des Wasserreservoirs mitträgt, sodass das derart herausragende Wasserreservoir durch die seitliche Verkleidung der Rahmenkonstruktion überdeckt wird. Auch bei dieser Variante ist es möglich, dass durch das derart herausragende Wasserreservoir eine Sitzgelegenheit oder eine Trittstufe gebildet wird, die nicht bündig mit der Pflanzwanne abschließt.

In einer Variante weist das Pflanzgefäß zudem eine obere Verkleidung auf. Diese obere Verkleidung erstreckt sich einerseits entlang zumindest eines Abschnitts eines seitlichen Außenbereichs der Rahmenkonstruktion. Wenn in diesem Abschnitt des seitlichen Außenbereichs der Rahmenkonstruktion bereits eine seitliche Verkleidung vorgesehen ist, erstreckt sich die obere Abdeckung entlang dieser seitlichen Verkleidung, die in diesem Abschnitt die Rahmenkonstruktion überdeckt. Andererseits erstreckt sich die obere Verkleidung entlang zumindest eines Abschnitts eines oberen Außenbereichs der Rahmenkonstruktion. Dabei überdeckt die obere Verkleidung sowohl die seitliche Verkleidung und/oder den seitlichen Abschnitt des Außenbereichs der Rahmenkonstruktion und/oder den oberen Abschnitt des Außenbereichs der Rahmenkonstruktion. Damit stellt die obere Verkleidung gleichsam einen oberen Abschluss des Pflanzgefäßes dar, der in optischer Hinsicht für ein ansprechendes Äußeres des Pflanzgefäßes sorgt und in technischer Hinsicht verhindert, dass Flüssigkeiten oder Verschmutzungen auf die Innenseite der Rahmenkonstruktion gelangen können.

In einer Variante ist die obere Verkleidung auf die Rahmenkonstruktion aufgesetzt, nicht jedoch mit dieser verschraubt. Dies ermöglicht einerseits ein geschlossenes Erscheinungsbild der oberen Rahmenkonstruktion nach außen, andererseits aber auch eine einfache Möglichkeit zum Entfernen der oberen Verkleidung. Die obere Verkleidung kann beispielsweise als ein die Rahmenkonstruktion im oberen Bereich überdeckender, insbesondere umlaufender Rahmen ausgestaltet sein, der eine Grundform aufweist, die einem Umfang der Grundfläche der Rahmenkonstruktion entspricht. Wenn die Rahmenkonstruktion beispielsweise eine quadratische Grundfläche hat, kann die obere Verkleidung als umlaufender quadratischer Rahmen ausgebildet sein, der auf einen oberen Bereich der Rahmenkonstruktion aufgesetzt ist. Durch den von den Seiten eines solchen quadratischen Rahmens umgebenden Bereich ist dann der Innenbereich der Pflanzwanne zugänglich.

In einer Variante erstreckt sich die Pflanzwanne über die gesamte Grundfläche des Innenbereichs der Rahmenkonstruktion. Das heißt, die Pflanzwanne kann eine größere Grundfläche aufweisen als das Wasserreservoir. In diesem Fall würde die Pflanzwanne das Wasserreservoir vollständig überdecken. Ferner würde die Pflanzwanne dann noch einen Freiraum überdecken, der in einer Variante zwischen dem Wasserreservoir und der Rahmenkonstruktion an zumindest einer Seite des Wasserreservoirs gebildet ist.

Mit dieser Ausgestaltung lässt sich der durch die Rahmenkonstruktion des Pflanzgefäßes bereitgestellte und auch eingenommene Platz in bestmöglicher Weise für die Pflanzwanne nutzen, sodass den in die Pflanzwanne einzusetzenden Pflanzen die größtmögliche Fläche und damit das größtmögliche Volumen innerhalb der Pflanzwanne bereitgestellt werden.

In einer weiteren Variante ist unterhalb der Pflanzwanne ein Aufnahmebereich für die Pumpe vorgesehen. Damit lässt sich die Pumpe in kompakter Art und Weise innerhalb der Rahmenkonstruktion des Pflanzgefäßes anordnen.

In einer weiteren Variante ist unterhalb der Pflanzwanne ein Aufnahmebereich für eine elektrische Einrichtung vorgesehen. Bei dieser elektrischen Einrichtung kann es sich beispielsweise um eine elektrische Verteilereinrichtung und/oder um eine Einrichtung zur Regelung und/oder Steuerung der Pumpe handeln. Beispielsweise kann eine Zeitschaltuhr vorgesehen sein, die einen benutzerspezifisch anpassbaren Intervallbetrieb der Pumpe ermöglicht. Bei der elektrischen Einrichtung kann es sich ferner beispielsweise um eine Mehrfachsteckdose, eine Schalteinrichtung, einen Transformator etc. handeln.

Sowohl der Aufnahmebereich für die Pumpe als auch der Aufnahmebereich für die elektrische Einrichtung können beispielsweise in dem Freiraum vorgesehen sein, der in einer Variante auf zumindest einer Seite des Wasserreservoirs zwischen dem Wasserreservoir und der Rahmenkonstruktion gebildet ist. Dann wird dieser Freiraum in äußerst platzsparender Art und Weise durch die Pumpe und/oder durch die elektrische Einrichtung eingenommen bzw. ausgefüllt.

Die elektrische Einrichtung des Pflanzgefäßes kann mit einer außerhalb des Pflanzgefäßes angeordneten Spannungsquelle verbunden sein, sodass für den bestimmungsgemäßen Betrieb des Pflanzgefäßes lediglich eine Stromleitung aus dem Pflanzgefäß heraus zu einer externen Spannungsquelle wie etwa einer Steckdose geführt werden muss. Es ist auch möglich, eine Batterie oder einen Akku als elektrische Einrichtung vorzusehen. In diesem Fall kann das Pflanzgefäß über einen Zeitraum, der von der Kapazität der Batterie bzw. des Akkus vorgegeben wird, vollkommen ohne externe Energiezufuhr betrieben werden. Wenn die Kapazität der Batterie bzw. des Akkus erschöpft ist, dann muss die Batterie ausgewechselt bzw. der Akku wieder aufgeladen werden. Dies kann in einer dem Fachmann an sich bekannten Weise bewerkstelligt werden. Es ist auch denkbar und vorgesehen, ein Solarmodul zur Erzeugung elektrischer Energie vorzusehen. Dann ist das Pflanzgefäß - insbesondere bei Aufstellung in einem Außenbereich - über einen besonders langen Zeitraum autark betreibbar, da ein Akku bei entsprechender Sonneneinstrahlung durch das Solarmodul stets neu geladen werden kann, sodass sich die Betriebsdauer des Pflanzgefäßes ohne externe Zufuhr elektrischer Energie signifikant erhöht.

In einer Variante können der Aufnahmebereich für die Pumpe und/oder der Aufnahmebereich für die elektrische Einrichtung ein Gehäuse aufweisen, das aus dem Pflanzgefäß entnommen werden kann. Auf diese Weise ist es besonders einfach möglich, die elektrische Einrichtung oder die Pumpe aus dem Gehäuse zu entfernen, um beispielsweise Wartungsarbeiten daran durchzuführen. Anschließend kann das Gehäuse mit der eingesetzten elektrischen Einrichtung bzw. mit der eingesetzten Pumpe wieder zurück in das Pflanzgefäß überführt werden. Das heißt, auf diese Art und Weise wird eine Modulbauweise des Pflanzgefäßes in Bezug auf die elektrische Einrichtung und/oder in Bezug auf die Pumpe bereitgestellt. Es wird also ein Elektromodul und/oder ein Pumpmodul gebildet, die einfach aus dem Pflanzgefäß entnommen werden und in das Pflanzgefäß eingestellt werden können.

In einer weiteren Variante sind der Aufnahmebereich für die Pumpe und/oder der Aufnahmebereich für die elektrische Einrichtung mit einer separaten seitlichen Abdeckung versehen. Diese separate seitliche Abdeckung sorgt für eine einfache Zugänglichkeit des Aufnahmebereichs für die Pumpe und/oder des Aufnahmebereich für die elektrische Einrichtung. Beispielsweise kann die separate seitliche Abdeckung nicht durch eine Verschraubung mit der Rahmenkonstruktion verbunden sein, sondern auf die Rahmenkonstruktion aufgesteckt sein oder durch eine andere, schnell lösbare Sicherungseinrichtung an der Rahmenkonstruktion gehalten werden. In dieser Variante lässt sich eine einfache Zugänglichkeit der Pumpe und/oder der elektrischen Einrichtung ermöglichen, während die übrige seitliche Verkleidung nicht von der Rahmenkonstruktion entfernt werden muss. Dies erleichtert sowohl die Bedienung des Pflanzgefäßes als auch etwaig durchzuführende Wartungs- oder Reparaturarbeiten an dem Pflanzgefäß.

In einer weiteren Variante ist das Wasserreservoir mit einem Überlauf ausgestaltet, damit Wasser aus dem Wasserreservoir nicht nur durch die Pumpe abgesaugt werden kann, sondern im Bedarfsfall auch über den Überlauf aus dem Wasserreservoir austreten kann. Auf diese Weise wird eine Überflutung eines unteren Bereichs der Pflanzwanne effektiv verhindert und der Entwicklung von Staunässe vorgebeugt. Der Überlauf mündet dabei vorzugsweise in einen das Pflanzgefäß umgebenden Raum. Beispielsweise kann der Überlauf als einfache Schlauchableitung in die Umgebung ausgeführt sein. Da der Überlauf im bestimmungsgemäßen Betrieb des Pflanzgefäßes typischerweise nicht von Wasser durchströmt wird, sondern tatsächlich nur für Notfälle vorgehalten wird, ist es regelmäßig nicht erforderlich, ein Auffanggefäß unter dem Überlauf zu platzieren. Dies kann dennoch im Einzelfall sinnvoll sein, wenn ein besonders wertvoller Fußbodenbelag vor einer etwaigen Durchnässung mit Wasser, das durch den Überlauf aus dem Pflanzgefäß austritt, verhindert werden soll.

Auf der Unterseite der Rahmenkonstruktion, die zu einem Untergrund, auf dem das Pflanzgefäß angeordnet ist, weist, können beispielsweise Füße für einen sicheren Stand des Pflanzgefäßes vorgesehen sein. Die Füße können beispielsweise fest (nicht verstellbar) oder höhenverstellbar ausgestaltet sein. Darüber hinaus ist es in einer Variante möglich, dass die Rahmenkonstruktion auf ihrer Unterseite eine Bewegungseinrichtung zur Bewegung des Pflanzgefäßes aufweist. Beispielsweise können statt der vorgenannten Füße Rollen oder Gleiter vorgesehen sein, um ein einfaches Bewegen des Pflanzgefäßes - auch im gefüllten Zustand - über einen Untergrund zu ermöglichen. Je nach Größe des Pflanzgefäßes und seiner Gesamtmasse, die insbesondere durch das in dem Wasserreservoir vorgehaltene Wasser und das in der Pflanzwanne befindliche Pflanzsubstrat sowie in dem Pflanzsubstrat eingepflanzte Pflanzen bestimmt wird, sind die an seiner Unterseite vorzusehenden Rollen oder Gleiter zu dimensionieren. Sie müssen ausreichend stabil sein, um eine sichere Bewegung des Pflanzgefäßes über einen Untergrund sowie einen sicheren Stand des Pflanzgefäßes auf dem Untergrund zu ermöglichen, wenn es nicht bewegt werden soll.

In einer Variante ist an der Rahmenkonstruktion oder in einem oberen Abschnitt des Innenbereichs der Pflanzwanne mindestens ein Halteelement vorgesehen, um eine Möglichkeit zum Anbinden einer Pflanze zu bieten. Das Halteelement kann beispielsweise als Öse (wie etwa eine Zurröse) ausgestaltet sein. Mit einer solchen Öse kann eine Pflanze besonders gut verzurrt bzw. festgebunden werden. Ferner ist es möglich, dass an der Rahmenkonstruktion oder an einem Innenbereich der Pflanzwanne eine Rankhilfe vorgesehen ist, die beispielsweise verstaubar ausgestaltet werden kann. In einem solchen Fall kann die Rankhilfe dann, wenn sie benötigt wird, in eine Rankposition gebracht werden. Wird die Rankhilfe hingegen nicht benötigt, kann sie in eine Verstauposition gebracht werden. Das Überführen der Rankhilfe aus der Verstauposition in die Rankposition kann beispielsweise durch ein Aufklappen oder ein Aufschieben der Rankhilfe erfolgen.

In einer Variante weist das Wasserreservoir eine Stützkonstruktion in seinem Innenbereich auf. Diese Stützkonstruktion kann beispielsweise durch Edelstahlprofile gebildet werden, die miteinander verschraubt oder verschweißt sind. Derartige Edelstahlprofile weisen gegenüber Aluminiumprofilen den Vorteil auf, dass sie keine wesentlichen Korrosionserscheinungen zeigen, wenn sie längere Zeit in Wasser gelagert werden. Die Stützkonstruktion dient dabei dazu, das Gewicht der Pflanzwanne, die auf das Wasserreservoir gesetzt wird, aufzunehmen. Durch eine entsprechende Stützkonstruktion ist es möglich, die Wandlungen des Wasserreservoirs mit einer geringeren Wandstärke auszuführen, als wenn keine Stützkonstruktion vorgesehen wäre. Auf diese Weise ist es möglich, trotz Einsatz einer derartigen Stützkonstruktion, eine signifikante Materialreduzierung bei gleichbleibender oder sogar erhöhter Stabilität des Wasserreservoirs (einschließlich Stützkonstruktion) zu ermöglichen.

In einer Variante handelt es sich bei der Stützkonstruktion um eine Rahmenkonstruktion, die Seitenbereiche aufweist und Querstreben, welche die Seitenbereiche miteinander verbinden. Die Seitenbereiche der Stützkonstruktion verlaufen dabei vorzugsweise parallel zu den Seitenwänden des Wasserreservoirs und kontaktieren diese Seitenwände. Ferner ist die Stützkonstruktion vorzugsweise derart ausgestaltet, dass sie bündig mit den Seitenwänden des Wasserreservoirs abschließt. Dadurch ergibt sich nach dem Einsetzen der Stützkonstruktion in das Wasserreservoir ein Gesamtgebilde, das keine überstehenden Teile aufweist, gleichzeitig aber eine hohe Stabilität zur Aufnahme des Gewichts der Pflanzwanne bietet.

In einer Variante ist ein Deckel zum Abdecken der Pflanzwanne vorgesehen. Ein solcher Deckel kann beispielsweise bei der Anzucht von Pflanzen hilfreich sein, um für definierte Anzuchtbedingungen zu sorgen. Darüber hinaus kann ein solcher Deckel als Winterschutz für in der Pflanzwanne befindliche Pflanzen dienen. Der Deckel kann beispielsweise mit Scharnieren an der Rahmenkonstruktion oder an der Pflanzwanne oder an einem anderen Element des Pflanzgefäßes angelenkt sein, um ein einfaches Öffnen des Deckels (beispielsweise durch ein Aufklappen) zu ermöglichen. Darüber hinaus kann der Deckel derart ausgestaltet sein, dass er dauerhaft von der Pflanzwanne entfernt werden kann, wenn er nicht benötigt wird. Für einen solchen Fall können beispielsweise abnehmbare Scharniere vorgesehen sein, die einerseits ein Aufklappen des Deckels, andererseits aber auch ein vollständiges Entfernen des Deckels ermöglichen.

In dem Deckel kann in einer Variante eine Klimavorrichtung vorgesehen sein. Diese Klimavorrichtung kann beispielsweise durch eine einfach zu öffnende und zu schließende Klappe (passive Einrichtung) oder einen Ventilator (aktive Einrichtung) ausgestaltet sein. Es ist auch möglich, eine dauerhaft geöffnete Klappe vorzusehen, um eine Zwangslüftung der Pflanzwanne auch bei aufgesetztem Deckel zu ermöglichen. Dabei ist es möglich, dass sich die Größe der durch die Klappe bereitgestellten Öffnung selbsttätig in Abhängigkeit der Temperaturverhältnisse ändert. Dies kann beispielsweise über einen Fensteröffner erreicht werden, der ein temperaturabhängiges Öffnungsverhalten zeigt. Statt einer Klappe könnten auch Lüftungsschlitze oder andere Lüftungseinrichtungen vorgesehen sein, um die Klimavorrichtung im Deckel zu realisieren.

In einer Variante weist das Pflanzgefäß eine Heizeinrichtung auf. Diese Heizeinrichtung kann beispielsweise als Heizspirale bzw. als Drahtheizung ausgestaltet sein und elektrisch betrieben werden. Es bietet sich an, eine derartige Heizeinrichtung in einem Pflanzsubstrat, welches in die Pflanzwanne eingefüllt werden soll, anzuordnen, um einen möglichst geringen Abstand zwischen der Heizeinrichtung und einem Wurzelballen einer Pflanze zu erreichen. Dann lässt sich dieser Wurzelballen auf besonders einfache Art und Weise auf einer gewünschten Temperatur halten, so dass Frostschäden vorgebeugt werden kann oder ein günstiges Pflanzenwachstum erreicht werden kann. Die Heizeinrichtung kann an die elektrische Einrichtung des Pflanzgefäßes angeschlossen werden, um über diese versorgt zu werden.

In einer weiteren Variante weist das Pflanzgefäß eine Beleuchtungseinrichtung auf. Eine solche Beleuchtungseinrichtung kann an einem beliebigen Platz am Pflanzgefäß befestigt werden (beispielsweise an der Rahmenkonstruktion oder an der Pflanzwanne). Die Beleuchtungseinrichtung kann an die elektrische Einrichtung des Pflanzgefäßes angeschlossen werden, um über diese versorgt zu werden. Mittels der Beleuchtungseinrichtung können für ein gutes Pflanzenwachstum besonders geeignete Lichtverhältnisse bereitgestellt werden.

In einer weiteren Variante ist eine Düngerdosiereinrichtung vorgesehen. Eine solche Düngerdosiereinrichtung kann als elektrisches oder als mechanisches System ausgestaltet sein und dient dazu, eine definierte Menge eines in einem Düngerreservoir vorrätig gehaltenen Düngers in das Wasserreservoir abzugeben, sodass dieser Dünger den in dem Pflanzgefäß befindlichen Pflanzen anschließend mit dem Wasser zugeführt werden kann. Diese Düngerdosiereinrichtung kann beispielsweise mit einer Wasserstandsanzeige gekoppelt werden, sodass immer dann eine vorbestimmte Menge eines Düngers dem in dem Wasserreservoir vorhandenen Wasser zugegeben wird, wenn ein bestimmter Wasserstand erreicht ist. Es ist aber auch denkbar und vorgesehen, die Düngerdosiereinrichtung mit einer Zeitschaltuhr zu koppeln, um in vorgebbaren Zeitintervallen eine definierte Düngermenge dem in dem Wasserreservoir vorhandenen Wasser zuzugeben. Auf diese Weise lassen sich ebenfalls besonders geeignete Wachstumsbedingungen für die in dem Pflanzgefäß befindlichen Pflanzen einstellen. Die Düngerdosiereinrichtung kann an die elektrische Einrichtung des Pflanzgefäßes angeschlossen werden, um über diese versorgt zu werden.

In einer Variante ist um den Ablauf herum ein schachtbildendes Element angeordnet, das sich bis zu einem oberen Bereich der Pflanzwanne erstreckt und einen direkten Kontakt zwischen einem in der Pflanzwanne eingefüllten Pflanzsubstrat und dem Ablauf verhindert. Dabei ist das schachtbildende Element derart ausgestaltet, dass es für Wasser durchlässig ist. Beispielsweise können Schlitze oder siebartige Vorrichtungen in dem schachtbildenden Element vorgesehen sein, durch die Wasser hindurchtreten kann, während ein Pflanzsubstrat im Wesentlichen zurückgehalten wird. Das schachtbildende Element bildet dann einen Revisionsschacht um den Abfluss herum, durch den der Abfluss jederzeit leicht von oben zugänglich ist. Das schachtbildende Element kann beispielsweise solche Dimensionen haben, dass ein Benutzer seinen Arm in das schachtbildende Element stecken kann, um auf den Ablauf zuzugreifen. Dann können etwaige, in dem Ablauf vorhandene Verschmutzungen oder dort auftretende Verstopfungen ganz einfach entfernt bzw. behoben werden. Dadurch lässt sich erreichen, dass der Ablauf stets gängig bleibt. Das schachtbildende Element kann beispielsweise eine rechteckige, insbesondere quadratische, oder eine runde Grundfläche aufweisen.

In einer weiteren Variante ist eine Wasserstandsanzeige vorgesehen, die sich zumindest teilweise innerhalb des schachtbildenden Elements erstreckt. Dabei steht die Wasserstandsanzeige vorzugsweise in Wirkverbindung mit dem Wasserreservoir, um einen Wasserfüllstand in dem Wasserreservoir korrekt anzeigen zu können. Wie bereits oben kurz erwähnt, kann diese Wasserstandsanzeige beispielsweise mit einer düngerdosierte Einrichtung verbunden werden, um in Abhängigkeit eines bestimmten Wasserstandes eine automatische zu Dosierung eines Düngers in das in dem Wasserreservoir vorhandene Wasser zu erreichen.

In einer Variante ist im Innenbereich der Pflanzwanne und/oder im Innenbereich des Wasserreservoirs zumindest ein Griff vorgesehen, mit dessen Hilfe die Pflanzwanne bzw. das Wasserreservoir einfach aus der Rahmenkonstruktion herausgehoben werden kann. Vorzugsweise ist an zwei einander gegenüberliegenden Seiten der Pflanzwanne bzw. des Wasserreservoirs jeweils ein Griff vorgesehen, um eine besonders einfache Handhabung beim Herausheben der Pflanzwanne und/oder des Wasserreservoirs zu ermöglichen.

Sämtliche der vorgenannten Varianten des beschriebenen Pflanzgefäßes sind in beliebiger Weise miteinander kombinierbar.

Weitere Einzelheiten des vorstehend beschriebenen Pflanzgefäßes sollen anhand eines Ausführungsbeispiels und entsprechender Figuren näher erläutert werden. Es zeigen:
- Figur 1: ein Gestell eines Ausführungsbeispiels eines Pflanzgefäßes;
- Figur 2: das Gestell der Figur 1 mit eingesetztem Wasserreservoir;
- Figur 3: das Gestell samt Wasserreservoir der Figur 2 mit eingesetzter Stützkonstruktion;
- Figur 4: das Gestell samt Wasserreservoir und Stützkonstruktion der Figur 3 mit in das Gestell eingesetzter Pflanzwanne;
- Figur 5: ein Pflanzgefäß aufweisend das Gestell mit Wasserreservoir, Stützkonstruktion und Pflanzwanne der Figur 4 mit Verkleidung;
- Figur 6A: eine Detaildarstellung eines Zulaufs des in der Figur 5 dargestellten Pflanzgefäßes;
- Figur 6B: eine Detaildarstellung eines Ablaufs des in der Figur 5 dargestellten Pflanzgefäßes und
- Figur 7: eine Detaildarstellung eines Überlaufs des in der Figur 5 dargestellten Pflanzgefäßes.

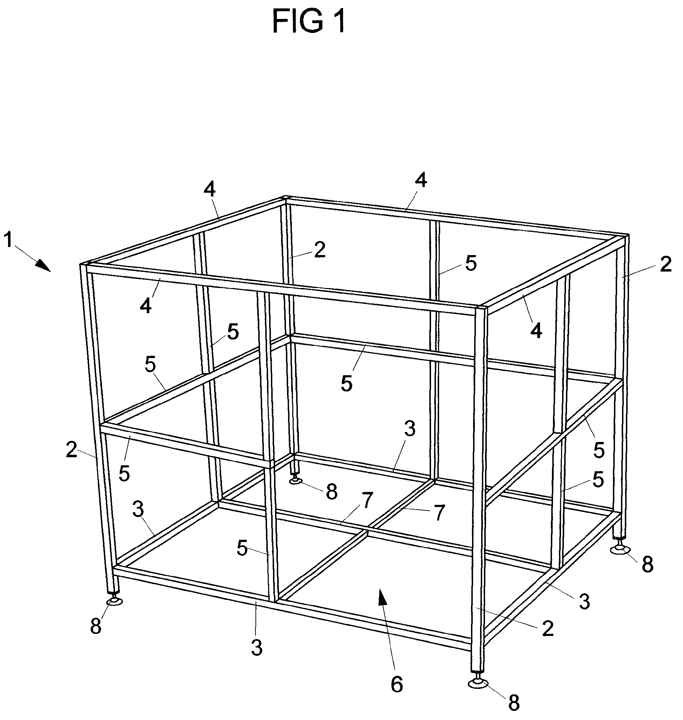

Die Figur 1 zeigt ein aus miteinander verschweißten Aluminiumprofilen gebildetes Gestell 1, das als Rahmenkonstruktion dient. Das Gestell 1 weist vier Eckstreben 2 auf, die die Ecken des Gestells 1 definieren. Es weist ferner vier untere Außenstreben 3 auf, die eine Grundfläche des Gestells 1 definieren. Außerdem weist es vier obere Außenstreben 4 auf, die eine Oberseite des Gestells definieren. Zwischen einander benachbarten Eckstreben 2 sind jeweils zwei seitliche Querstreben 5 angeordnet, die zur Versteifung der Seitenbereiche des Gestells 1 dienen. Dabei strecken sich fast alle seitlichen Querstreben 5 über die gesamte Fläche der einzelnen Seitenbereiche des Gestells 1. Lediglich auf der dem Betrachter zugewandten Seite des Gestells 1 erstreckt sich eine horizontal verlaufende Querstrebe 5 nicht von einer ersten Eckstrebe 2 bis zu einer zweiten Eckstrebe 2, sondern lediglich bis zu einer vertikal angeordneten seitlichen Querstrebe 5. Auf diese Weise wird ein türartiger Bereich 6 geschaffen, der eine erleichterte Zugänglichkeit eines Innenbereichs des Gestells 1 ermöglicht.

Auf einer Unterseite des Gestells 1 sind zwischen den unteren Außenstreben 3 ebenfalls zur Versteifung zwei untere Querstreben 7 angeordnet, die sich jeweils von einer unteren Außenstrebe 3 zur gegenüberliegenden unteren Außenstrebe 3 erstrecken.

Auf der Oberseite des Gestells 1 sind keine derartigen Querstreben zur Versteifung vorgesehen, um eine uneingeschränkte Zugänglichkeit des Innenbereichs des Gestells 1 von oben zu ermöglichen.

Auf einer einem Untergrund, auf dem das Gestell 1 angeordnet ist, zugewandten Seite des Gestells 1 sind vier Standfüße 8 vorgesehen, auf denen das gesamte Gestell 1 steht. Bei Bedarf können diese vier Standfüße 8 durch vier Rollen ersetzt werden, um eine Beweglichkeit des Gestells 1 zu ermöglichen.

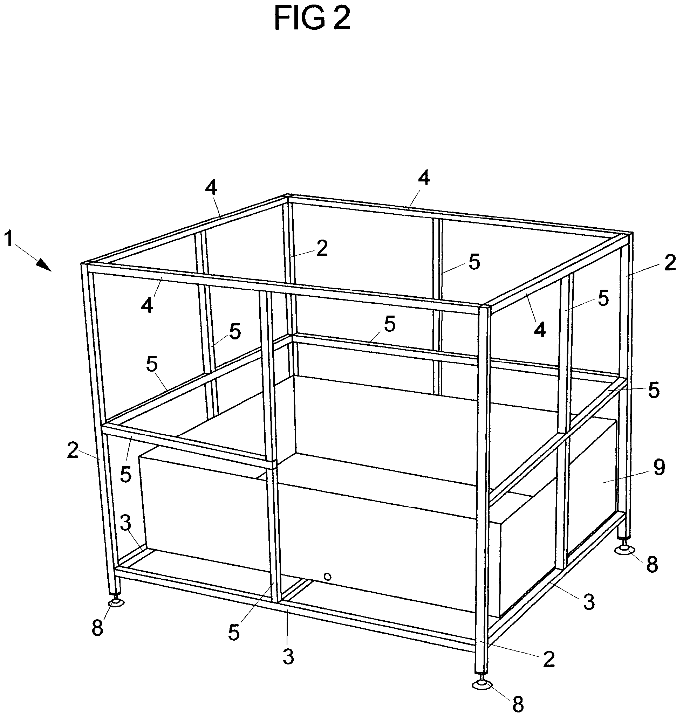

Die Figur 2 zeigt das Gestell 1 der Figur 1, wobei in den Innenraum des Gestells 1 ein Wasserreservoir 9 eingesetzt wurde. In dieser wie auch in alle nachfolgenden Zeichnungen werden dieselben Elemente mit denselben Bezugszeichen versehen. Es wird insoweit auf die bereits erfolgten Erläuterungen zu diesen Elementen verwiesen. Ein Einsetzen des Wasserreservoirs 9 erfolgt von oben durch die von den vier oberen Außenstreben 4 umrandete Öffnung. Das Wasserreservoir 9 besteht aus miteinander verschweißten Edelstahlplatten. Es wird nicht mit dem Gestell 1 verschraubt, sondern lediglich in dieses eingesetzt.

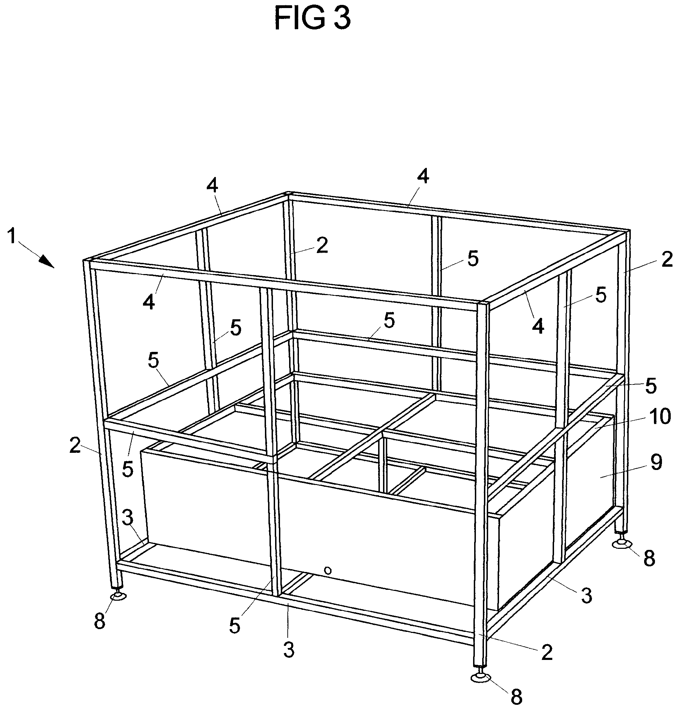

Die Figur 3 zeigt das Gestell 1 mit eingesetztem Wasserreservoir 9 aus der Figur 2, wobei in das Wasserreservoir 9 zusätzlich eine Stützkonstruktion 10 eingesetzt ist. Diese Stützkonstruktion 10 ist ähnlich wie das Gestell 1 rahmenartig aufgebaut, wobei die Außenseiten der Stützkonstruktion 10 an der Innenseite des Wasserreservoirs 9 anliegen und an der Oberseite des Wasserreservoirs 9 bündig mit diesem abschließen. Längs und quer verlaufende Stützstreben, die sich von einer Seite der Stützkonstruktion bis zur gegenüberliegenden Seite der Stützkonsumtion erstrecken, sorgen für eine zusätzliche Stabilität der Stützkonstruktion in dem Wasserreservoir 9.

Wie aus den Figuren 2 und 3 ersichtlich ist, erstreckt sich das Wasserreservoir 9 nicht über die gesamte Grundfläche des Gestells 1, sondern lässt in einem dem Betrachter zugewandten Bereich des Gestells 1 einen Abschnitt der Grundfläche des Gestells 1 frei, so dass ein Freiraum gebildet wird.

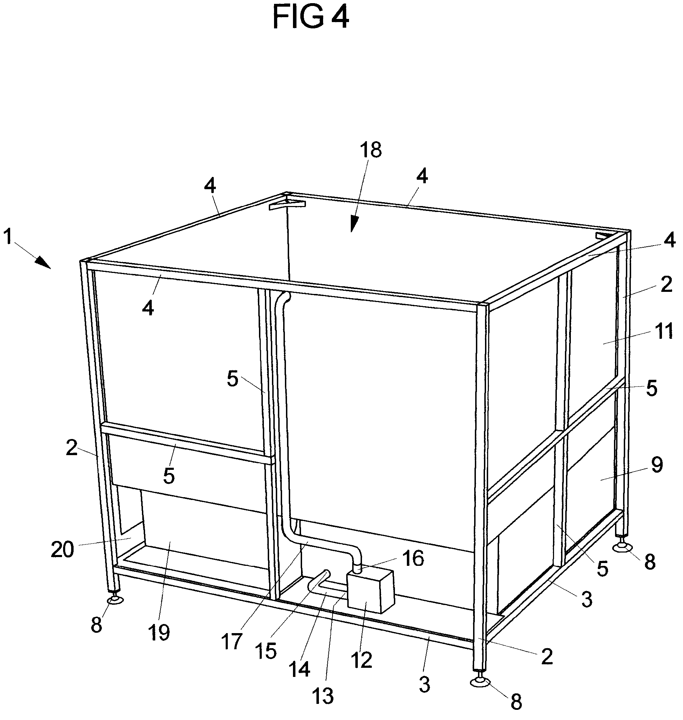

Die Figur 4 zeigt das Gestell 1 der Figur 3 mit eingesetztem Wasserreservoir 9 und eingesetztem Stützkreuz 10, wobei zusätzlich eine Pflanzwanne 11 auf das Wasserreservoir 9 und das Stützkreuz 10 gesetzt wurde. Der Stützkreuz 10 ist in der Darstellung der Figur 4 nicht mehr zu sehen, da es vollständig von der Pflanzwanne 11 verdeckt wird. Die Pflanzwanne 11 erstreckt sich über die gesamte Grundfläche des Gestells 1, sodass sie an allen vier oberen Außenstreben 4 anliegt. Zudem schließt sie mit den vier oberen Außenstreben 4 bündig ab.

Die Pflanzwanne 11 überdeckt das Wasserreservoir 9 vollständig. Da das Wasserreservoir 9 - wie im Zusammenhang mit den Figuren 2 und 3 erläutert - nicht die gesamte Grundfläche des Gestells 1 einnimmt, wird ein Bereich gebildet, der von anderen Elementen besetzt werden kann. So ist in diesem Bereich eine Pumpe 12 angeordnet, deren Saugseite 13 über eine Schlauchverbindung 14 mit einem Auslass 15 des Wasserreservoirs 9 strömungstechnisch verbunden ist. Die Pumpe 12 weist ferner eine Druckseite 16 auf, die über eine Schlauchleitung 17 mit einem Wassereinlass in einen Innenbereich 18 der Pflanzwanne 11 verbunden ist. Dieser Innenbereich 18 der Pflanzwanne 11 ist über einen Ablauf, der in einer Grundfläche der Pflanzwanne 11 ausgebildet ist, strömungstechnisch mit einem Innenbereich des Wasserreservoirs 9 verbunden.

Neben der Pumpe 12 ist zudem ein Gehäuse 19 vorgesehen, das zur Aufnahme von elektrischen Einrichtungen dient, wobei eine Elektrozuleitung durch eine Öffnung 20 hindurch geführt werden kann.

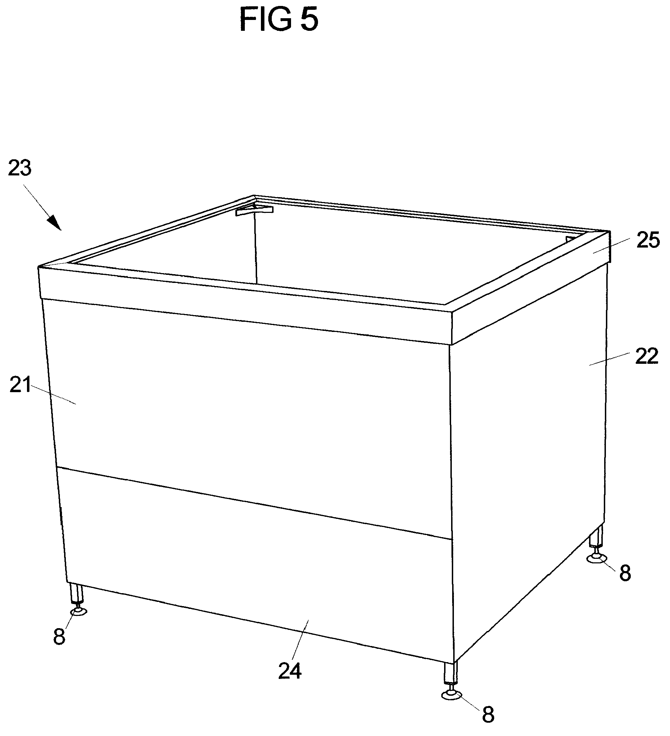

In der Figur 5 ist das in der Figur 4 gezeigte Gestell 1 mit einer ersten Seitenwand 21 und einer zweiten Seitenwand 22 verkleidet dargestellt, sodass nun ein Pflanzgefäß 23 gebildet ist. Während sich die zweite Seitenwand 22 im Wesentlichen von einer Unterseite des Pflanzgefäßes 23 bis zu einer Oberseite des Pflanzgefäßes 23 erstreckt, erstreckt sich die erste Seitenwand 21 nur über eine solche Höhe des Pflanzgefäßes 23, der von der Pflanzwanne 11 eingenommen wird. In einem unteren Bereich ist eine zusätzliche Seitenverkleidung 24 vorgesehen, die leicht abnehmbar ausgestaltet ist, um auf die dahinterliegende Pumpe und Elektroeinrichtung zugreifen zu können (vergleiche hierzu Figur 4).

In einem oberen Bereich des Pflanzgefäßes 23 ist zudem ein oberer Abdeckungsrand 25 vorgesehen, der umlaufend ausgestaltet ist und den gesamten oberen Umfang des Pflanzgefäßes 23 überdeckt. Dabei ist der obere Abdeckungsrand 25 auf die darunterliegenden oberen Außenstreben 4 aufgesetzt, sodass er diese und die Seitenwände 21, 22 überdeckt. Durch die leichte Zugänglichkeit aller elektrischen Komponenten sowie der Pumpe nach Abnahme der zusätzlichen Seitenwand 24 ist es problemlos möglich, die Pumpe sowie alle elektrischen Komponenten von dem Pflanzgefäß 23 abzubauen.

Im bestimmungsgemäßen Betrieb des Pflanzgefäßes 23 saugt die Pumpe 12 Wasser aus dem Wasserreservoir 9 und pumpt dieses über die Schlauchleitung 17 in die Pflanzwanne 11. Über den Ablauf der Pflanzwanne 11 läuft das Wasser dann in einer vordefinierten Zeit wieder in das Wasserreservoir 9 zurück. Die Pumpe 12 füllt dabei die Pflanzwanne 11 auch dann, wenn das Wasser zur gleichen Zeit durch den Ablauf aus der Pflanzwanne 11 in das Wasserreservoir 9 zurückläuft.

Die Pumpe 12 lässt sich am einfachsten über eine handelsübliche Zeitschaltuhr bedienen, sodass ein Umwälzen von Wasser nur während bestimmter Betriebszeiten der Pumpe 12 erfolgt. Anschließend hat das Wasser genügend Zeit, ein in der Pflanzwanne 11 befindliches Substrat zu befeuchten, wobei überschüssiges Wasser wieder durch den Ablauf der Pflanzwanne 11 in das Wasserreservoir 9 zurückfließen kann.

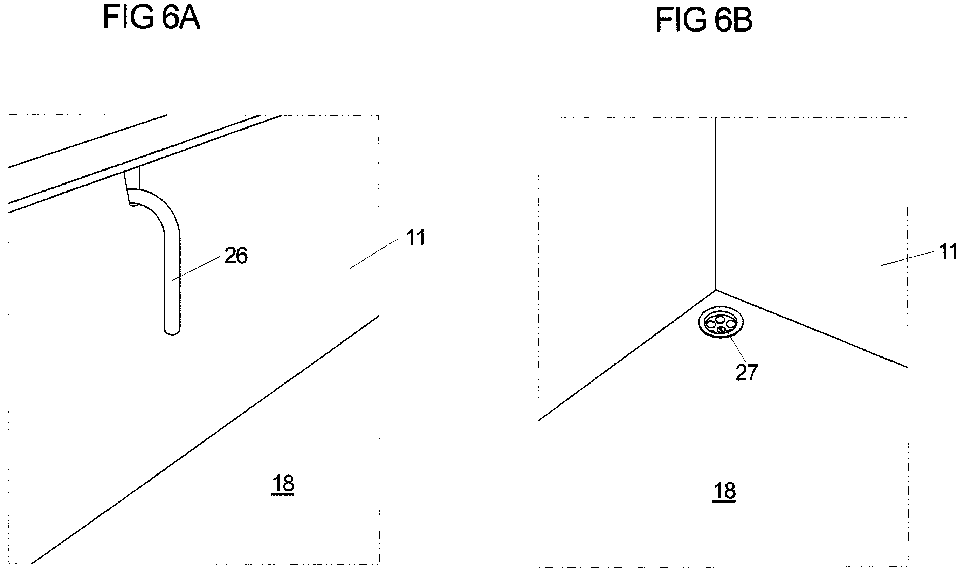

Die Figur 6A zeigt ein Detail eines Zulaufs 26 in den Innenbereich 18 der Pflanzwanne 11. Der Zulauf 26 ist dabei in einem oberen Bereich der Pflanzwanne 11 angeordnet, sodass durch den Zulauf 26 in die Pflanzwanne 11 eintretendes Wasser die Möglichkeit hat, sämtliches Substrat, welches in der Pflanzwanne 11 während des bestimmungsgemäßen Betriebes des Pflanzgefäßes vorgehalten wird, zu befeuchten.

Die Figur 6B zeigt ein Detail eines Ablaufs 27, durch den hindurch Wasser aus dem Innenbereich 18 der Pflanzwanne 11 abfließen kann. Der Ablauf 27 ist dabei in einer Ecke einer Grundfläche der Pflanzwanne 11 ausgebildet und als handelsüblicher Wannenablauf ausgestaltet. Über die Größe der Löcher im Ablauf 27 kann die Menge des Wassers, das durch den Ablauf 27 aus dem Innenraum 18 der Pflanzwanne 11 pro Zeiteinheit herausfließen kann, definiert werden.

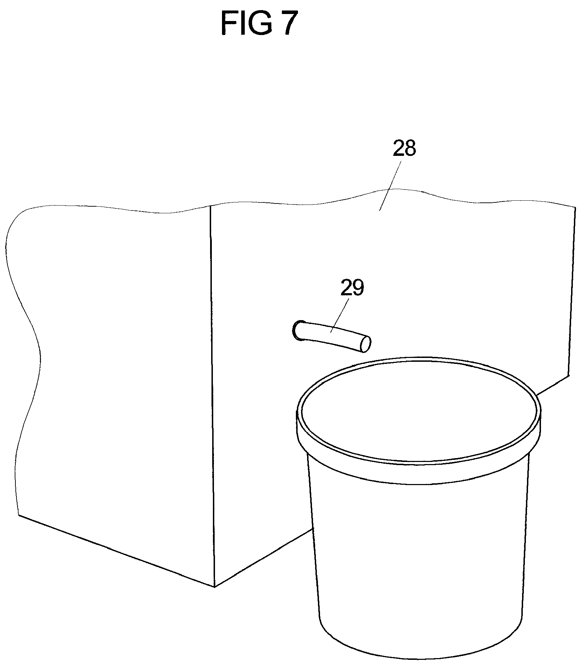

Die Figur 7 zeigt eine Außenansicht des Pflanzgefäßes 23, wobei auf der Seite einer dritten Seitenwand 28 ein Überlauf 29 ausgebildet ist, der in Strömungsverbindung mit einem oberen Bereich des Wasserreservoirs 9 steht. Sollte die Pumpe nicht oder nicht korrekt arbeiten, verhindert der Überlauf 29 eine Havarie im Inneren des Pflanzgefäßes, indem er überschüssiges Wasser aus dem Wasserreservoir 9 in einem Bereich außerhalb des Pflanzgefäßes führen kann.

## Patentansprüche

1. Pflanzgefäß, **gekennzeichnet durch**
• eine Rahmenkonstruktion (1),
• ein in die Rahmenkonstruktion (1) eingesetztes Wasserreservoir (9), das von der Rahmenkonstruktion (1) getragen wird,
• eine in die Rahmenkonstruktion (1) eingesetzte Pflanzwanne (11), die sich zumindest teilweise oberhalb des Wasserreservoirs (9) erstreckt,
• einen Ablauf in der Pflanzwanne (27), **durch** den eine Strömungsverbindung zwischen einem Innenbereich (18) der Pflanzwanne (11) und einem Innenbereich des Wasserreservoirs (9) realisiert ist,
• eine Pumpe (12) mit einer Saugseite (13) und einer Druckseite (16), wobei die Saugseite (13) in Strömungsverbindung mit dem Innenbereich des Wasserreservoirs (11) steht und die Druckseite (16) in Strömungsverbindung mit dem Innenbereich (18) der Pflanzwanne (11) steht, und
• eine seitliche Verkleidung (21, 22, 28), die sich entlang zumindest eines Abschnitts eines seitlichen Außenbereichs der Rahmenkonstruktion (1) erstreckt und die Rahmenkonstruktion (1) in diesem Abschnitt überdeckt.

2. Pflanzgefäß nach Anspruch 1, **dadurch gekennzeichnet, dass** es ferner eine obere Verkleidung (25) aufweist, die sich einerseits entlang zumindest eines Abschnitts eines seitlichen Außenbereichs der Rahmenkonstruktion (1) oder entlang der diesen Abschnitt überdeckenden seitlichen Verkleidung (21, 22, 28) und andererseits entlang zumindest eines Abschnitts eines oberen Außenbereichs der Rahmenkonstruktion (1) erstreckt, wobei die obere Verkleidung (25) die seitliche Verkleidung (21, 22, 28) und/oder den Abschnitt des Außenbereichs der Rahmenkonstruktion (1) überdeckt.

3. Pflanzgefäß nach Anspruch 2, **dadurch gekennzeichnet, dass** die obere Verkleidung (25) auf die Rahmenkonstruktion (1) aufgesetzt ist.

4. Pflanzgefäß nach einem der vorherigen Ansprüche, **dadurch gekennzeichnet, dass** sich die Pflanzwanne (11) über eine gesamte Grundfläche eines Innenbereichs der Rahmenkonstruktion (1) erstreckt.

5. Pflanzgefäß nach einem der vorherigen Ansprüche, **dadurch gekennzeichnet, dass** unterhalb der Pflanzwanne (11) ein Aufnahmebereich für die Pumpe (12) vorgesehen ist.

6. Pflanzgefäß nach einem der vorherigen Ansprüche, **dadurch gekennzeichnet, dass** unterhalb der Pflanzwanne (11) ein Aufnahmebereich (19) für eine elektrische Einrichtung vorgesehen ist.

7. Pflanzgefäß nach Anspruch 5 oder 6, **dadurch gekennzeichnet, dass** der Aufnahmebereich für die Pumpe (12) und/oder der Aufnahmebereich (19) für die elektrische Einrichtung ein Gehäuse aufweist, das aus dem Pflanzgefäß (23) entnehmbar ist.

8. Pflanzgefäß nach einem der Ansprüche 5 bis 7, **dadurch gekennzeichnet, dass** der Aufnahmebereich für die Pumpe (12) und/oder der Aufnahmebereich (19) für die elektrische Einrichtung mit einer separaten seitlichen Abdeckung (24) versehen ist, um eine einfache Zugänglichkeit des Aufnahmebereichs für die Pumpe (12) und/oder des Aufnahmebereichs (19) für die elektrische Einrichtung zu ermöglichen.

9. Pflanzgefäß nach einem der vorherigen Ansprüche, **dadurch gekennzeichnet, dass** das Wasserreservoir (9) einen Überlauf (29) aufweist, der in einen das Pflanzgefäß (23) umgebenden Bereich mündet.

10. Pflanzgefäß nach einem der vorherigen Ansprüche, **dadurch gekennzeichnet, dass** die Rahmenkonstruktion (1) auf ihrer Unterseite eine Bewegungseinrichtung zur Bewegung des Pflanzgefäßes (23) aufweist.

11. Pflanzgefäß nach einem der vorherigen Ansprüche, **dadurch gekennzeichnet, dass** der Innenbereich des Wasserreservoirs (9) eine Stützkonstruktion (10) aufweist.

12. Pflanzgefäß nach Anspruch 11, **dadurch gekennzeichnet, dass** die Stützkonstruktion (10) eine Rahmenkonstruktion ist, deren Seitenbereiche parallel zu Seitenwänden des Wasserreservoirs (9) verlaufen und bündig mit diesen abschließen.
